# EUROPEAN PATENT APPLICATION

(11) **EP 3 181 627 A1**
(43) Date of publication of application: **21.06.2017**
(21) Application number: 15200100.4
(22) Date of filing: 15.12.2015
(51) Int. Cl.: C08K 3/38, C09J 11/04, C09J 133/02

(54) **THERMALLY CONDUCTIVE PRESSURE SENSITIVE ADHESIVE COMPRISING ANISOTROPIC BORON NITRIDE AGGLOMERATES**

(71) Applicant: 3M Innovative Properties Company, St. Paul, MN 55133-3427 (US)
(72) Inventor: Wieneke, Jan, 41453 Neuss (DE); Rieder-Otterburg, Susanne, 41453 Neuss (DE); Kayser, Armin, 41453 Neuss (DE); Uibel, Krishna, 41453 Neuss (DE); Engler, Martin, 41453 Neuss (DE); Schaedel, Robert, 41453 Neuss (DE); Takujiro, Yamabe, Kanagawa-ken 252-5285 (JP)
(74) Representative: Gabriel, Kiroubagaranne

(57) **Abstract**

The present disclosure relates to a thermally conductive pressure sensitive adhesive composition, comprising:
a) an acrylic polymer component; and
b) a boron nitride mixture composition comprising:
i. anisotropic boron nitride agglomerates comprising hexagonal boron nitride primary particles, wherein the hexagonal boron nitride primary particles have an average primary particle size d₅₀ comprised between 1 and 50 µm, wherein the anisotropic boron nitride agglomerates have an average agglomerate size d₅₀ comprised between 50 and 250 µm and an aspect ratio greater than 1.5, and wherein the envelope density of the anisotropic boron nitride agglomerates is greater than 1 g/cm³, when measured according to the test method described in the experimental section; and
ii. (optionally), free hexagonal boron nitride primary particles having an average primary particle size d₅₀ comprised between 3 and 50 µm; and
wherein the content of the boron nitride mixture composition is greater than 15 vol%, based on the volume of the thermally conductive pressure sensitive adhesive composition.

The present disclosure also relates to a method of manufacturing such thermally conductive pressure sensitive adhesives and uses thereof.

## Description

### Technical Field

The present disclosure relates generally to the field of pressure sensitive adhesives (PSA), more specifically to the field of thermally conductive pressure sensitive adhesives. The present disclosure also relates to a method of manufacturing such pressure sensitive adhesives and uses thereof.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives.

Pressure sensitive adhesives (PSAs) are well known to one of ordinary skill in the art, and according to the Pressure-Sensitive Tape Council, PSAs are known to possess properties including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). PSAs do not embrace compositions merely because they are sticky or adhere to a surface.

These requirements are assessed generally by means of tests which are designed to individually measure tack, adhesion (peel strength), and cohesion (shear holding power), as noted in A.V. Pocius in Adhesion and Adhesives Technology: An Introduction, 2nd Ed., Hanser Gardner Publication, Cincinnati, OH, 2002. These measurements taken together constitute the balance of properties often used to characterize a PSA.

With broadened use of pressure-sensitive adhesive tapes over the years, performance requirements have become more demanding. In that context, pressure sensitive adhesives combining acceptable thermal conductivity and reasonable adhesive properties have been developed for use in particular in the assembly of electronic components.

For example, heat-conductive pressure sensitive adhesives may be used for the attachment of heat sinks to a variety of electronic components such as e.g. integrated circuits, hybrid packages, multi-chip modules or photovoltaic concentrator cells. The function of the heat-conductive pressure sensitive adhesives in these applications is to provide heat transfer medium for the conduction of heat away from heat-sensitive electronic components to the heat sink. Thermally conductive pressure sensitive adhesives suitable for use in these applications are described e.g. in EP-A1-0 566 093 (Webb et al.), US Patent No. 6,123,799 (Ohura et al.) or in US-A1-2011/0031435 (Yoda et al.). In some other applications, such as in high powered batteries in automobiles, the function of the heat-conductive pressure sensitive adhesives is to provide heat transfer medium for the conduction of heat to parts or components requiring heat to ensure safe operation temperatures. The disclosed heat-conductive pressure sensitive adhesives generally make use of inorganic thermally conductive fillers.

In order to achieve increased thermal conductivity in filled polymeric materials, it is commonly recommended to use higher filler loading levels. However, it is also commonly recognized that in polymeric compounds filled with typical thermally conductive fillers (in particular boron nitride), the viscosity of the filled polymeric material increases significantly in proportion to the loading concentration of the filler material. Increased viscosity build-up or inadequate viscosity of the filled polymeric material may dramatically hamper the ability to further process the filled polymeric material, in particular to perform processing operations such as e.g. mixing, dispensing or coating. This inability or increased processing complexity may render such blended material less suitable for certain specific applications. In that context, WO 03/013845-A1 (Pujari et al.) and US 2006/0121068-A1 (Sane et al.) describe the specific use of spherical boron nitride agglomerates as low viscosity filler for polymeric compounds.

Recent developments in the automobile industry towards hybrid and electric automobiles have seen the emergence of high powered batteries having in particular high-voltage, high-energy capacity and high-energy density. These high powered batteries, which are generally made of a plurality of cells connected in series or in parallel, require efficient thermal management (cooling and/or heating) to maintain the performance and the lifetime of the battery in various thermal conditions. A solution for achieving appropriate cooling for a high battery pack is described in EP-A1-2 492 991 (Terada et al.) which makes use of a three-layer laminated structure functioning as a thermally conductive member and meant to be arranged between battery cells when assembling the battery cells into a battery pack.

When used in the manufacturing of high powered batteries, in particular for connecting a plurality of battery cells, a pressure sensitive adhesive composition shall not only provide excellent adhesive properties, but should also provide excellent thermal conductivity, in particular high through-plane thermal conductivity, so as to ensure efficient heat dissipation or distribution. Moreover, these properties should not be obtained at the expense of increased processing complexity.

Without contesting the technical advantages associated with the adhesive solutions known in the art, there is still a need for a pressure sensitive adhesive composition combining excellent adhesion properties and excellent through-plane thermal conductivity, while preserving excellent processing capability of the pressure sensitive adhesive composition. Other advantages of the adhesive compositions and methods of the disclosure will be apparent from the following description.

### Summary

According to one aspect, the present disclosure relates to a thermally conductive pressure sensitive adhesive composition, comprising:
a) an acrylic polymer component; and
b) a boron nitride mixture composition comprising:
   i. anisotropic boron nitride agglomerates comprising hexagonal boron nitride primary particles, wherein the hexagonal boron nitride primary particles have an average primary particle size d₅₀ comprised between 1 and 50 µm, wherein the anisotropic boron nitride agglomerates have an average agglomerate size d₅₀ comprised between 50 and 250 µm and an aspect ratio greater than 1.5, and wherein the envelope density of the anisotropic boron nitride agglomerates is greater than 1 g/cm³, when measured according to the test method described in the experimental section; and
   ii. (optionally), free hexagonal boron nitride primary particles having an average primary particle size d₅₀ comprised between 3 and 50 µm; and
wherein the content of the boron nitride mixture composition is greater than 15 vol%, based on the volume of the thermally conductive pressure sensitive adhesive composition.

In another aspect, the present disclosure is directed to a method of manufacturing a thermally conductive pressure sensitive adhesive, which comprises the steps of:
a) providing a (co)polymerizable material comprising a (meth)acrylate ester monomer; and optionally, a co-monomer having an ethylenically unsaturated group;
b) polymerizing the (co)polymerizable material comprising a (meth)acrylate ester monomer, thereby forming a (co)polymerized material having a coatable viscosity;
c) providing a boron nitride mixture composition comprising:
   i. anisotropic boron nitride agglomerates comprising hexagonal boron nitride primary particles, wherein the hexagonal boron nitride primary particles have an average primary particle size d₅₀ comprised between 1 and 25 µm, wherein the anisotropic boron nitride agglomerates have an average agglomerate size d₅₀ comprised between 50 and 250 µm and an aspect ratio greater than 1.5, and wherein the envelope density of the anisotropic boron nitride agglomerates is greater than 1 g/cm³, when measured according to the test method described in the experimental section; and
   ii. (optionally), free hexagonal boron nitride primary particles having an average primary particle size d₅₀ comprised between 3 and 25µm; and
      whereby the content of the boron nitride mixture composition is greater than 15 vol%, based on the volume of the thermally conductive pressure sensitive adhesive composition;
d) blending the boron nitride mixture composition and the (co)polymerized material, thereby forming a homogeneous coatable composition;
e) coating the coatable composition onto a substrate thereby forming a layer of a thermally conductive pressure sensitive adhesive; and
f) optionally, curing the layer of the thermally conductive pressure sensitive adhesive.

According to still another aspect, the present disclosure relates to the use of a thermally conductive pressure sensitive adhesive composition as described above for industrial applications, in particular for thermal management applications.

### Detailed description

According to a first aspect, the present disclosure relates to a thermally conductive pressure sensitive adhesive composition, comprising:
a) an acrylic polymer component; and
b) a boron nitride mixture composition comprising:
   i. anisotropic boron nitride agglomerates comprising hexagonal boron nitride primary particles, wherein the hexagonal boron nitride primary particles have an average primary particle size d₅₀ comprised between 1 and 50 µm, wherein the anisotropic boron nitride agglomerates have an average agglomerate size d₅₀ comprised between 50 and 250 µm and an aspect ratio greater than 1.5, and wherein the envelope density of the anisotropic boron nitride agglomerates is greater than 1 g/cm³, when measured according to the test method described in the experimental section; and
   ii. (optionally), free hexagonal boron nitride primary particles having an average primary particle size d₅₀ comprised between 3 and 50 µm; and
wherein the content of the boron nitride mixture composition is greater than 15 vol%, based on the volume of the thermally conductive pressure sensitive adhesive composition.

In the context of the present disclosure, it has been surprisingly found that a thermally conductive pressure sensitive adhesive composition as described above, in particular a composition comprising a boron nitride mixture composition as detailed above, provides excellent through-plane thermal conductivity combined with excellent adhesion characteristics, while preserving excellent processing capability of the pressure sensitive adhesive composition. It has in particular been found that an acrylic-based pressure sensitive adhesive composition comprising a boron nitride mixture composition as detailed above provides outstanding peel adhesion characteristics, while efficiently reducing any viscosity build-up of the filled acrylic-based polymeric composition, even at high filler loading. The thermally conductive pressure sensitive adhesive composition as described above is provided with excellent viscosity characteristics, which make it suitable for common processing operations such as e.g. mixing, dispensing or coating. The excellent processing capability provided by the thermally conductive pressure sensitive adhesive composition of the present disclosure (in particular coatability) are particularly beneficial for achieving efficient thermal management, in particular when used in the manufacturing of high powered batteries.

Without wishing to be bound by theory, it is believed that this excellent processing capability made possible in particular by the excellent viscosity characteristics, is due in particular to the presence of the anisotropic boron nitride agglomerates comprising hexagonal boron nitride primary particles, wherein the hexagonal boron nitride primary particles have an average primary particle size d₅₀ comprised between 1 and 50 µm, wherein the anisotropic boron nitride agglomerates have an average agglomerate size d₅₀ comprised between 50 and 250 µm and an aspect ratio greater than 1.5, and wherein the envelope density of the anisotropic boron nitride agglomerates is greater than 1 g/cm³, when measured according to the test method described in the experimental section. In particular, and still without wishing to be bound by theory, it is believed that anisotropic boron nitride agglomerates having an envelope density greater than 1 g/cm³ provide advantageous low to moderate pore volume which directly translates into advantageous low to moderate acrylic polymeric resin absorption. It is further believed that the ability to maintain low to moderate acrylic polymeric resin absorption results into more controlled viscosity characteristics, in particular reduced viscosity build-up of the filled acrylic polymeric matrix. It is indeed believed that higher amount of acrylic polymers absorbed by the filler material results in lower content of free available acrylic polymer in the polymeric matrix, which in turn results into increased viscosity of the filled acrylic polymeric matrix. Incidentally, an improved viscosity build-up prevention ability allows higher filler loading and ultimately increased thermal conductivity performance of the acrylic polymeric matrix. Furthermore, the excellent processing capability provided by the thermally conductive pressure sensitive adhesive composition of the present disclosure also translates into easier manufacturing steps, enhanced formulation flexibility (in particular with respect the acrylic-based polymeric matrix), excellent stability characteristics and quality of the resulting acrylic-based thermally conductive pressure sensitive adhesive composition, which is at least partly due to the excellent coating quality permitted by the compositions of the present disclosure.

In the context of the present disclosure, the expression "hexagonal boron nitride primary particle agglomerate" is meant to designate an assembly of hexagonal boron nitride primary particles rigidly joined together by fusion, sintering, growth or by using a binder. Particle agglomerates are typically not easily dispersed. In contrast, the expression "hexagonal boron nitride primary particle aggregate" is meant to designate an assembly of hexagonal boron nitride primary particles, wherein the particles are loosely attached together by contact. Particle aggregates are typically easily dispersed.

In the context of the present disclosure, the expression "isotropic agglomerate" is meant to designate an agglomerate of particles wherein the particles are oriented in the agglomerate without any preferred direction with respect to one another. In contrast, the expression "anisotropic agglomerate" is meant to designate an agglomerate of particles wherein the particles are arranged in the agglomerate with a preferred orientation with respect to one another.

Still without wishing to be bound by theory, it is believed that the excellent through-plane thermal conductivity provide by the pressure sensitive adhesive composition of the present disclosure, is due to the presence of the anisotropic boron nitride agglomerates comprising hexagonal boron nitride primary particles, wherein the hexagonal boron nitride primary particles have an average primary particle size d₅₀ comprised between 1 and 50 µm, wherein the anisotropic boron nitride agglomerates have an average agglomerate size d₅₀ comprised between 50 and 250 µm and an aspect ratio greater than 1.5. These moderately large type of anisotropic hexagonal boron nitride primary particle agglomerates are believed to form thermal conduction pathways through the z-direction of the pressure sensitive adhesive material layer, whereby the hexagonal boron nitride primary particle agglomerates are preferably in direct physical contact to each other, thus providing excellent thermal percolation through the pressure sensitive adhesive material layer.

When the boron nitride mixture composition further comprises optional free hexagonal boron nitride primary particles having an average primary particle size d₅₀ comprised between 3 and 50 µm and/or other types of hexagonal boron nitride primary particle agglomerates, it is believed that these additional particles or agglomerates contribute in forming additional thermal conduction pathways through the z-direction of the pressure sensitive adhesive material layer. The additional particles or agglomerates are believed to "cross-bridge" the first moderately large type of anisotropic hexagonal boron nitride primary particle agglomerates, thereby improving the overall through-plane thermal conductivity.

In the context of the present disclosure, the expression "through-plane thermal conductivity" is meant to designate thermal conductivity through the direction perpendicular to the plane formed by the pressure sensitive adhesive material layer (z-direction). In contrast, the expression "in-plane thermal conductivity" is meant to designate thermal conductivity within the plane formed by the pressure sensitive adhesive material layer (x-y direction).

In the context of the present disclosure, it has been surprisingly found that pressure sensitive adhesive compositions comprising a boron nitride mixture composition as detailed above, provide excellent through-plane thermal conductivity while preserving acceptable in-plane thermal conductivity.

The thermally conductive pressure sensitive adhesive compositions of the present disclosure are outstandingly suitable for thermal management applications. As such, the thermally conductive pressure sensitive adhesive compositions of the present disclosure are particularly suited for transportation and electronic market applications, in particular automotive and aerospace applications.

The thermally conductive pressure sensitive adhesive compositions of the present disclosure are further characterized by excellent adhesion characteristics, in particular peel adhesion performance.

The thermally conductive pressure sensitive adhesive composition of the present disclosure comprises, as a first technical feature, an acrylic polymer component. Acrylic polymer components for use herein are not particularly limited. Any acrylic polymer component commonly known in the art may be used in the context of the present disclosure. Suitable acrylic polymer components for use herein will be easily identified by those skilled in the art, in the light of the present description. Exemplary acrylic polymer components for use herein are described in EP-A1-0 566 093 (Webb et al.) or in US-A1-2011/0031435 (Yoda et al.), the content of which is herewith fully integrated by reference. In the context of the present disclosure, the expressions "acrylic polymer" and "polyacrylate" may be used interchangeably.

Typically, the acrylic polymer component for use herein is the polymerization reaction product of a (co)polymerizable material comprising a (meth)acrylate ester monomer, and optionally, a co-monomer having an ethylenically unsaturated group.

In a typical aspect, the (meth)acrylate ester monomer for use herein for use herein comprise C₁-C₃₂ (meth)acrylic acid ester monomer units. Suitable C₁-C₃₂ (meth)acrylic acid ester monomer units for use herein may be easily identified by those skilled in the art, in the light of the present disclosure.

In a typical aspect, the (meth)acrylate ester monomer units for use herein comprises linear or branched alkyl (meth)acrylate ester, preferably a non-polar linear or branched alkyl (meth)acrylate ester having a linear or branched alkyl group comprising from 1 to 32 carbon atoms.

In a particular aspect of the present disclosure, the C₁-C₃₂ (meth)acrylic acid ester monomer units for use herein are selected from the group of C₁-C₂₅ (meth)acrylic acid ester monomer units, C₁-C₂₀ (meth)acrylic acid ester monomer units, C₁-C₁₈ (meth)acrylic acid ester monomer units, C₂-C₁₆ (meth)acrylic acid ester monomer units, C₂-C₁₄ (meth)acrylic acid ester monomer units, or even C₂-C₁₂ (meth)acrylic acid ester monomer units.

In another particular aspect, the C₁-C₃₂ (meth)acrylic acid ester monomer units for use herein are selected from the group of C₄-C₃₀ (meth)acrylic acid ester monomer units, C₄-C₁₄ (meth)acrylic acid ester monomer units, or even from the group of C₄-C₁₂ (meth)acrylic acid ester monomer units.

According to another particular aspect of the present disclosure, the C₁-C₃₂ (meth)acrylic acid ester monomer units are selected from the group consisting of C₄-C₁₂ (meth)acrylic acid ester monomer units, preferably from the group consisting of iso-octyl (meth)acrylate, 2-ethylhexyl (meth)acrylate, 2-propylheptyl (meth)acrylate, 2-octyl (meth)acrylate, butyl acrylate, and any combinations or mixtures thereof; more preferably from the group consisting of iso-octyl acrylate, 2-ethylhexyl acrylate, 2-octyl acrylate, and 2-propylheptyl acrylate.

In a preferred aspect of the present disclosure, the C₁-C₃₂ (meth)acrylic acid ester monomer units are selected from the group consisting of iso-octyl acrylate, 2-ethylhexyl acrylate, and any combinations or mixtures thereof.

The C₁-C₃₂ (meth)acrylic acid ester monomer units for use herein may be present in the acrylic polymer component in any suitable amounts. In some exemplary aspects, the C₁-C₃₂ (meth)acrylic acid ester monomer units for use herein may be present in the acrylic polymer component in an amount of from 45 wt% to 99 wt%, based on the weight of the acrylic polymer component.

In a particular aspect, the (co)polymerizable material useful for preparing the acrylic polymer component for use herein, further comprises a co-monomer having an ethylenically unsaturated group and copolymerizable with the (meth)acrylate ester monomer units.

According to an advantageous aspect, the co-monomer having an ethylenically unsaturated group is a polar co-monomer, preferably a polar acrylate, more preferably selected from the group consisting of acrylic acid, methacrylic acid, itaconic acid, hydroxyalkyl acrylates, acrylamides and substituted acrylamides, acrylamines and substituted acrylamines and any combinations or mixtures thereof. Preferably, the co-monomer having an ethylenically unsaturated group for use herein is selected from the group consisting of acrylic acid, methacrylic acid, itaconic acid, isobornyl acrylate, and hydroxyalkyl acrylates. More preferably, the co-monomer having an ethylenically unsaturated group is selected to be acrylic acid.

The co-monomer units having an ethylenically unsaturated group may be present in the acrylic polymer component in any suitable amounts. In some exemplary aspects, the co-monomer units having an ethylenically unsaturated group for use herein may be present in the acrylic polymer component in an amount of from 1 wt% to 15 wt%, based on the weight of the acrylic polymer component.

In a particular aspect, the acrylic polymer component for use herein comprises:
a) from 45 wt% to 99 wt% of C₁-C₃₂ (meth)acrylic acid ester monomer units, based on the weight of the acrylic polymer component;
b) from 1 wt% to 15 wt% of co-monomers having an ethylenically unsaturated group, based on the weight of the acrylic polymer component; and
c) optionally, from 0 wt% to 40 wt% of further ethylenically unsaturated polar monomer units which are copolymerizable with monomer units (a) and/or (b), based on the weight of the acrylic polymer component.

In a preferred aspect, the (co)polymerizable material for making the acrylic polymer component for use herein, comprises a mixture of 2-ethylhexyl acrylate and acrylic acid monomer units.

In the context of the present disclosure, the acrylic polymer component for use herein may be present in the pressure sensitive adhesive composition in any suitable amounts. In some exemplary aspects, the acrylic polymer component may be present in the pressure sensitive adhesive composition in an amount of from 20 wt% to 90 wt%, from 20 wt% to 70 wt%, from 25 wt% to 60 wt%, or even from 25 wt% to 50 wt% based on the weight of the pressure sensitive adhesive composition.

The acrylic polymer component for use herein may be prepared by processes familiar to the skilled person, with particular advantage by conventional free-radical polymerizations or controlled radical polymerizations. A variety of conventional free radical polymerization methods, including solution, bulk (i.e., with little or no solvent), dispersion, emulsion, and suspension processes, which processes are familiar to the skilled person. The particular method used may be influenced by the use of the final pressure sensitive adhesive composition. The reaction product of the polymerizable material can be random or block copolymers. The polyacrylates may be prepared by copolymerization of the monomeric components using the usual polymerization initiators and also, where appropriate, regulators (chain transfer agents), with polymerization taking place at the customary temperatures in bulk, in emulsion, such as in water or liquid hydrocarbons, for example, or in solution.

In an advantageous aspect, the acrylic polymer component is prepared by polymerization of the monomers in solvents, more particularly in solvents with a boiling range from 50 to 150°C or from 60 to 120° C, using the customary amounts of polymerization initiators, these generally being 0.01% to 5%, more particularly 0.1% to 2%, by weight (based on the total weight of the monomers).

In some other methods of preparing the acrylic polymer component for use herein, the (co)polymerizable material containing the monomers is partially (co)polymerized so as to increase its viscosity to that corresponding to a viscous material. Generally, the main monomers and other optional monomers are mixed with a portion of the free radical polymerization initiator. Depending on the type of initiator added, the mixture is typically exposed to actinic radiation or heat to partially polymerize the monovalent monomers (i.e., monomers with a single ethylenically unsaturated group). In an advantageous aspect, the (co)polymerizable material containing the monomers is partially polymerized so as to obtain a material having a relatively low viscosity. This low viscosity enables blending the boron nitride mixture into the (co)polymerized material while minimizing the damages to the boron nitride mixture due to the mechanical blending.

The thermally conductive pressure sensitive adhesive composition of the present disclosure comprises, as a second technical feature, a boron nitride mixture composition comprising:
i. anisotropic boron nitride agglomerates comprising hexagonal boron nitride primary particles, wherein the hexagonal boron nitride primary particles have an average primary particle size d₅₀ comprised between 1 and 50 µm, wherein the anisotropic boron nitride agglomerates have an average agglomerate size d₅₀ comprised between 50 and 250 µm and an aspect ratio greater than 1.5, and wherein the envelope density of the anisotropic boron nitride agglomerates is greater than 1 g/cm³, when measured according to the test method described in the experimental section; and
ii. (optionally), free hexagonal boron nitride primary particles having an average primary particle size d₅₀ comprised between 3 and 50 µm; and
   wherein the content of the boron nitride mixture composition is greater than 15 vol%, based on the volume of the thermally conductive pressure sensitive adhesive composition.

Hexagonal boron nitride primary particles having an average primary particle size d₅₀ comprised between 1 and 50 µm, and hexagonal boron nitride primary particles having an average primary particle size d₅₀ comprised between 3 and 50µm, as well as the various boron nitride primary particle agglomerates for use herein may be purchased from the 3M Company under commercial designation 3M™ Boron Nitride Cooling Fillers, in particular 3M™ Boron Nitride Cooling Platelets and 3M™ Boron Nitride Cooling Agglomerates.

The anisotropic boron nitride agglomerates for use herein may be purchased from the 3M Company under commercial designation 3M™ Boron Nitride Cooling Filler Flakes, in particular 3M™ Boron Nitride Cooling Filler Flakes 200-15 and 3M™ Boron Nitride Cooling Filler Flakes 200-3-W.

Alternatively, hexagonal boron nitride primary particles have an average primary particle size d₅₀ comprised between 1 and 50 µm, and hexagonal boron nitride primary particles having an average primary particle size d₅₀ comprised between 3 and 50µm, as well as the various boron nitride primary particle agglomerates for use herein may be obtained according to techniques well known to those skilled in the art.

According to an advantageous aspect of the thermally conductive pressure sensitive adhesive composition of the present disclosure, the envelope density of the anisotropic boron nitride agglomerates is greater than 1.2 g/cm³, greater than 1.4 g/cm³, greater than 1.5 g/cm³, greater than 1.7 g/cm³, greater than 1.8 g/cm³, or even greater than 2.0 g/cm³, when measured according to the test method described in the experimental section.

According to another advantageous aspect of the thermally conductive pressure sensitive adhesive composition of the present disclosure, the envelope density of the anisotropic boron nitride agglomerates is comprised between 1.2 and 2.2 g/cm³, between 1.4 and 2.2 g/cm³, between 1.5 and 2.0 g/cm³, or even between 1.7 and 2.0 g/cm³, when measured according to the test method described in the experimental section.

Without wishing to be bound by theory, it is believed that the selected range of envelope density as specified above for the anisotropic boron nitride agglomerates advantageously affects the through-plane thermal conductivity properties of the thermally conductive pressure sensitive adhesive composition according to the present disclosure. Still without wishing to be bound by theory, it is believed that hexagonal boron nitride primary particle agglomerates having envelope density comprised between 0.3 and 2.2 g/cm³, possess suitable porosity ensuring good volume filling effect and thereby good thermal percolation.

In a beneficial aspect of the thermally conductive pressure sensitive adhesive composition of the present disclosure, the anisotropic boron nitride agglomerates have an average agglomerate size d₅₀ comprised between 60 and 220 µm, between 80 and 200 µm, between 80 and 180 µm, between 90 and 180 µm, between 90 and 160 µm, between 90 and 140 µm, or even between 90 and 120 µm.

The average primary particle size d₅₀ and average agglomerate size d₅₀ are typically determined by means of laser diffraction (wet measurement, Mastersizer 2000, Malvern Instruments, Malvern UK).

Advantageously, the anisotropic boron nitride agglomerates have an aspect ratio greater than 2, greater than 3, or even greater than 4. Advantageously still, the anisotropic boron nitride agglomerates have an aspect ratio no greater than 10, no greater than 8, no greater than 7, no greater than 5, or even no greater than 4. Yet advantageously, the anisotropic boron nitride agglomerates have an aspect ratio comprised between 1.7 and 10, between 2.0 and 8.0, between 2.0 and 6.0, or even between 3.0 and 5.0.

According to a particular aspect, the anisotropic boron nitride agglomerates for use herein have a specific surface area (SSA) measured by BET (Brunauer, Emmett and Teller) no greater than 10 m²/g, no greater than 8 m²/g, no greater than 7 m²/g, no greater than 5 m²/g, or even no greater than 4 m²/g.

According to another particular aspect, the anisotropic boron nitride agglomerates for use herein have a specific surface area (SSA) measured by BET comprised between 1.5 and 10 m²/g, between 1.5 and 8.0 m²/g, between 2.0 and 7.0 m²/g, between 2.5 and 6.5 m²/g, between 2.5 and 6.0 m²/g, between 2.5 and 5.5 m²/g, between 2.5 and 5.0 m²/g, between 3.0 and 4.5 m²/g or even between 3.0 and 4.0 m²/g.

In a typical aspect, the thickness of the anisotropic boron nitride agglomerates for use herein are comprised between 5 and 100 µm, between 5 and 80 µm, between 10 and 60 µm, between 15 and 50 µm, between 15 and 45 µm, between 20 and 40 µm, or even between 25 and 35 µm.

According to an advantageous aspect of the thermally conductive pressure sensitive adhesive composition of the present disclosure, the hexagonal boron nitride primary particles comprised in the anisotropic boron nitride agglomerates have an average primary particle size d₅₀ comprised between 1 and 40 µm, between 1 and 30 µm, between 1 and 25 µm, between 1 and 20 µm, between 5 and 20 µm, between 8 and 18 µm, between 10 and 18 µm, between 12 and 18 µm, or even between 13 and 17 µm.

According to another advantageous aspect of the thermally conductive pressure sensitive adhesive composition of the present disclosure, the hexagonal boron nitride primary particles comprised in the anisotropic boron nitride agglomerates have an average primary particle size d₅₀ comprised between 1 and 40 µm, between 1 and 30 µm, between 1 and 25 µm, between 1 and 20 µm, between 1 and 15 µm, between 1 and 10 µm, between 1 and 8 µm, between 2 and 8 µm, between 2 and 6 µm, between 1 and 5 µm, or even between 2 and 4 µm.

In a beneficial aspect of the thermally conductive pressure sensitive adhesive composition of the present disclosure, the anisotropic boron nitride agglomerates for use herein are free of organic or inorganic binder, in particular free of organic binder. Without wishing to be bound by theory, it is believed that the presence of a secondary binder, in particular an organic binder comprising organic functional groups, in the anisotropic boron nitride agglomerates (hybrid agglomerate) may lead to undesirable complexation in the acrylic-based polymeric matrix, which may detrimentally affect the viscosity characteristics of the filled acrylic-based polymeric composition. Some inorganic binders, such as alumino-based binders, which might be present in the anisotropic boron nitride agglomerates may in some cases also lead to unwanted viscosity build-up and ultimately to increased viscosity.

Similarly, and in another advantageous aspect of the thermally conductive pressure sensitive adhesive composition of the present disclosure, the anisotropic boron nitride agglomerates for use herein are free of surface treatment, in particular free of surface functionalization. The presence of surface functionalization is also believed to detrimentally affect the viscosity characteristics of the filled acrylic-based polymeric composition.

According to another beneficial aspect, the anisotropic boron nitride agglomerates for use herein are free of fines fraction, in particular free of fines fraction of non-agglomerated material having a size of less than 100 µm, or even less than 50 µm.

According to a preferred execution of the thermally conductive pressure sensitive adhesive composition of the present disclosure, the hexagonal boron nitride primary particles forming the anisotropic boron nitride agglomerates are agglomerated with one another with a preferred orientation. In a beneficial aspect, the anisotropic boron nitride agglomerates for use herein have a flake shape.

Advantageously still, the hexagonal boron nitride primary particles forming the anisotropic boron nitride agglomerates for use herein are agglomerated with one another with a preferred orientation in such a way that the planes of the hexagonal boron nitride primary particles are essentially aligned parallel to one another.

Anisotropic boron nitride agglomerates for use herein may be obtained according to manufacturing techniques commonly known to those skilled in the art. Exemplary anisotropic boron nitride agglomerates for use herein and methods of manufacturing thereof are described e.g. in US-A1-2012/0114905 (Engler et al.).

In a typical aspect of the thermally conductive pressure sensitive adhesive composition according to the present disclosure, the anisotropic boron nitride agglomerates are obtained by one or several compaction steps. Advantageously, the compaction step(s) is followed by a thermal treatment, preferably performed at a temperature of up to 2300°C, more preferably at a temperature comprised between 1200 and 2050°C, between 1400 and 2000°C, or even between 1600 and 1950°C.

According to a particular execution of the thermally conductive pressure sensitive adhesive composition of the present disclosure, the boron nitride mixture composition for use herein may comprise, as an optional ingredient, free hexagonal boron nitride primary particles having an average primary particle size d₅₀ comprised between 3 and 50 µm.

In an advantageous aspect, the free hexagonal boron nitride primary particles for use herein have an average primary particle size d₅₀ comprised between 3 and 45 µm, between 3 and 40 µm, between 4 and 35 µm, between 5 and 30 µm, between 5 and 25 µm, between 10 and 20 µm, between 10 and 18 µm, between 12 and 18 µm, or even between 13 and 16 µm.

Exemplary free hexagonal boron nitride primary particles having an average primary particle size d₅₀ comprised between 3 and 50 µm for use herein are commercially available from the 3M Company, under the commercial designation 3M Boron Nitride Cooling Filler Platelets 015.

According to another particular execution of the thermally conductive pressure sensitive adhesive composition of the present disclosure, the boron nitride mixture composition for use herein may comprise, as a further optional ingredient, isotropic hexagonal boron nitride primary particle agglomerates having an average agglomerate size d₅₀ comprised between 60 and 420 µm.

Without wishing to be bound by theory, it is believed that the presence of these additional isotropic hexagonal boron nitride primary particle agglomerates in the boron nitride mixture composition further contributes in forming additional thermal conduction pathways through the z-direction of the pressure sensitive adhesive material layer. These additional agglomerates are believed to "cross-bridge" the first moderately large type of anisotropic hexagonal boron nitride primary particle agglomerates, and optionally the free hexagonal boron nitride primary particles having an average primary particle size d₅₀ comprised between 3 and 50 µm, thereby improving the overall through-plane thermal conductivity of the thermally conductive pressure sensitive adhesive composition according to the present disclosure. The additional isotropic hexagonal boron nitride primary particle agglomerates are also believed to provide suitable compression characteristics enabling advantageous soft physical contact between boron nitride particles and/or agglomerates.

In an advantageous aspect of the thermally conductive pressure sensitive adhesive composition, the isotropic hexagonal boron nitride primary particle agglomerates for use herein have an average agglomerate size d₅₀ comprised between 60 and 420 µm, between 60 and 400 µm, between 60 and 300 µm, between 60 and 200 µm, between 60 and 150 µm, between 70 and 150 µm, between 70 and 120 µm, between 70 and 100 µm, or even between 80 and 100 µm.

In another advantageous aspect of the thermally conductive pressure sensitive adhesive composition, the isotropic hexagonal boron nitride primary particle agglomerates for use herein have an average agglomerate size d₅₀ comprised between 60 and 400 µm, between 60 and 300 µm, between 80 and 250 µm, between 80 and 200 µm, between 90 and 180 µm, between 100 and 160 µm, between 100 and 150 µm, or even between 110 and 150 µm.

Suitable isotropic hexagonal boron nitride primary particle agglomerates for use herein may be easily identified by those skilled in the art, in the light of the present disclosure. In a typical aspect, the isotropic hexagonal boron nitride primary particle agglomerates for use herein have a substantially bulk shape, but the disclosure is not that limited. In a more typical aspect, suitable isotropic hexagonal boron nitride primary particle agglomerates for use herein have a substantially shape and an aspect ratio of no greater than 2.

Exemplary isotropic hexagonal boron nitride primary particle agglomerates for use herein are commercially available from the 3M Company, under the following commercial designations 3M Boron Nitride Cooling Filler Agglomerates 50, 3M Boron Nitride Cooling Filler Agglomerates 100, 3M Boron Nitride Cooling Filler Agglomerates 200, or even 3M Boron Nitride Cooling Filler Agglomerates 100-200.

Alternatively, isotropic hexagonal boron nitride primary particle agglomerates for use herein may be obtained according to manufacturing techniques commonly known to those skilled in the art. In an exemplary aspect, the isotropic hexagonal boron nitride primary particle agglomerates for use herein are obtained by heat treatment. Exemplary heat treatment steps include, but are not limited to, high-temperature annealing, fusion, sintering, and any combinations thereof, with or without using an inorganic binder phase.

In an advantageous aspect of the thermally conductive pressure sensitive adhesive composition, the anisotropic boron nitride agglomerates comprising hexagonal boron nitride primary particles, the optional free hexagonal boron nitride primary particles having an average primary particle size d₅₀ comprised between 3 and 25 µm, and the optional isotropic hexagonal boron nitride primary particle agglomerates, are not obtained from the same source of boron nitride particles. In particular, the various types of particle agglomerates for use herein do not result from the physical processing of a unique source of boron nitride particles, in particular from a unique source of particle agglomerates having a greater average agglomerate size d₅₀. Advantageously still, the various types of particle agglomerates for use herein do not result from in-situ physical processing steps (such as pulverization or any other particle size adjustment or fractioning processing steps) which are and believed to detrimentally affect the through-plane thermal conductivity performance of the resulting thermally conductive pressure sensitive adhesive composition due to the rather destructive nature of these processing steps.

According to a beneficial aspect of the thermally conductive pressure sensitive adhesive composition, the various types of particle agglomerates for use herein originate from distinct sources of boron nitride particles.

According to a beneficial aspect, the hexagonal boron nitride primary particles have a platelet shape. In a more typical aspect, the hexagonal boron nitride primary particles have a lamellar particle morphology, preferably combined with a platelet shape.

Without wishing to be bound by theory, it is believed that the platelet shape of the hexagonal boron nitride primary particles advantageously contributes to the excellent through-plane thermal conductivity provided by the thermally conductive pressure sensitive adhesive composition of the present disclosure.

According to a particular execution of the thermally conductive pressure sensitive adhesive composition of the present disclosure, the boron nitride mixture composition for use herein comprises:
i. anisotropic boron nitride agglomerates comprising hexagonal boron nitride primary particles and having an average agglomerate size d₅₀ comprised between 50 and 250 µm, between 60 and 220 µm, between 80 and 200 µm, between 80 and 180 µm, between 90 and 180 µm, between 90 and 160 µm, between 90 and 140 µm, or even between 90 and 120 µm;
ii. free hexagonal boron nitride primary particles having an average primary particle size d₅₀ comprised between 3 and 25µm, between 5 and 25 µm, between 10 and 20 µm, between 10 and 18 µm, between 12 and 18 µm, or even between 13 and 16 µm; and
iii. optionally, isotropic hexagonal boron nitride primary particle agglomerates having an average agglomerate size d₅₀ comprised between 60 and 420 µm, between 60 and 300 µm, between 60 and 200 µm, or even between 70 and 150 µm.

According to an advantageous aspect, the thermally conductive pressure sensitive adhesive composition of the present disclosure comprises a boron nitride mixture composition in an amount greater than 18 vol%, greater than 20 vol%, greater than 22 vol%, greater than 24 vol%, greater than 26 vol%, or even greater than 28 vol%, based on the volume of the thermally conductive pressure sensitive adhesive composition.

While an amount of boron nitride mixture composition greater than 15 vol%, based on the volume of the thermally conductive pressure sensitive adhesive composition, already provides excellent through-plane thermal conductivity characteristics to the thermally conductive pressure sensitive adhesive composition, amounts of boron nitride mixture composition greater than 18 vol%, greater than 20 vol%, greater than 22 vol%, greater than 24 vol%, greater than 26 vol%, or even greater than 28 vol%, typically provide improved through-plane thermal conductivity performance while preserving excellent adhesive properties of the thermally conductive pressure sensitive adhesive composition.

Without wishing to be bound by theory, it is believed that an increased loading of the corresponding boron nitride mixture within the thermally conductive pressure sensitive adhesive composition, advantageously affects the forming of thermal conduction pathways through the z-direction of the pressure sensitive adhesive material layer by enhancing the creation of direct physical contact between the various types of hexagonal boron nitride primary particles and agglomerates present in the thermally conductive pressure sensitive adhesive composition, thus providing improved thermal percolation through the pressure sensitive adhesive material layer.

Accordingly, in a beneficial aspect of the thermally conductive pressure sensitive adhesive composition according to the present disclosure, the anisotropic boron nitride agglomerates, and optionally, the free hexagonal boron nitride primary particles and/or the isotropic hexagonal boron nitride primary particle agglomerates are, at least partially, in direct physical contact to each other within the thermally conductive pressure sensitive adhesive composition. Direct physical contact between hexagonal boron nitride primary particles and agglomerates may be easily observed by e.g. Scanning Electron Microscopy (SEM).

According to a particular aspect of the present disclosure, the thermally conductive pressure sensitive adhesive composition comprises a boron nitride mixture composition in an amount no greater than 45 vol%, no greater than 40 vol%, no greater than 35 vol%, or even no greater than 30 vol%, based on the volume of thermally conductive pressure sensitive adhesive composition.

According to another particular aspect of the present disclosure, the thermally conductive pressure sensitive adhesive composition comprises a boron nitride mixture composition in an amount comprised between 15 and 45 vol%, between 16 and 40 vol%, between 18 and 35 vol%, between 20 and 35 vol%, between 22 and 32 vol%, between 24 and 30 vol%, or even between 24 and 28 vol%, based on the volume of thermally conductive pressure sensitive adhesive composition.

In a typical aspect, the thermally conductive pressure sensitive adhesive composition of the present disclosure comprises the anisotropic boron nitride agglomerates in an amount greater than 10 vol%, greater than 15 vol%, greater than 20 vol%, or even greater than 25 vol%, based on the volume of thermally conductive pressure sensitive adhesive composition.

In another typical aspect, the thermally conductive pressure sensitive adhesive composition of the present disclosure comprises the anisotropic boron nitride agglomerates in an amount comprised between 10 and 35 vol%, between 10 and 30 vol%, between 15 and 30 vol%, between 20 and 30 vol%, or even between 25 and 30 vol%, based on the volume of thermally conductive pressure sensitive adhesive composition.

In yet another typical aspect, the thermally conductive pressure sensitive adhesive composition of the present disclosure comprises the anisotropic boron nitride agglomerates in an amount comprised between 30 and 95 wt%, between 40 and 90 wt%, between 60 and 90 wt%, between 70 and 90 wt%, or even between 80 and 90 wt%, based on the weight of the boron nitride mixture composition.

According to an exemplary aspect of the present disclosure, the thermally conductive pressure sensitive adhesive composition comprises the free hexagonal boron nitride primary particles in an amount greater than 1 vol%, greater than 2 vol%, greater than 3 vol%, greater than 4 vol%, or even greater than 5 vol%, based on the volume of the thermally conductive pressure sensitive adhesive composition.

According to still another aspect of the present disclosure, the thermally conductive pressure sensitive adhesive composition comprises the free hexagonal boron nitride primary particles in an amount comprised between 1 and 10 vol%, between 1 and 8 vol%, between 2 and 8 vol%, between 3 and 8 vol%, or even between 3 and 6 vol%, based on the volume of thermally conductive pressure sensitive adhesive composition.

According to yet another aspect of the present disclosure, the thermally conductive pressure sensitive adhesive composition comprises the free hexagonal boron nitride primary particles in an amount comprised between 1 and 25 wt%, between 1 and 20 wt%, between 2 and 15 wt%, between 3 and 10 wt%, or even between 5 and 10 wt%, based on the weight of the boron nitride mixture composition.

As will be apparent to those skilled in the art, the thermally conductive pressure sensitive adhesive composition of the present disclosure may contain additional ingredients depending on the ultimate application. Suitable optional ingredients may be easily identified by the skilled person in view of the targeted application.

According to a particular aspect, the thermally conductive pressure sensitive adhesive composition further comprises additional filler material. Additional filler material may in particular advantageously affect the mechanical and/or thermal conductivity property of the corresponding thermally conductive pressure sensitive adhesive composition.

In an exemplary aspect, the filler material for use herein is a further thermally conductive filler material. Exemplary thermally conductive filler material includes, but is not limited to, particulate material comprising metal oxides, metal hydroxides, metal silicates, nitrides, carbides, or any combinations or mixtures thereof.

In a particular aspect of the thermally conductive pressure sensitive adhesive composition of the present disclosure, the filler material for use herein comprises aluminum oxides, aluminum hydroxides, silica, aluminum nitrates, aluminum nitrides, aluminum silicates, magnesium oxides, magnesium hydroxides, silicon carbides, or any combinations or mixtures thereof.

The thermally conductive pressure sensitive adhesive compositions according to the present disclosure are characterized by providing excellent balance of properties with respect to viscosity characteristics, adhesive performance and thermal conductivity, in particular through-plane thermal conductivity. It has been a long-standing recognized challenge in the art to achieve such an acceptable balance of performance. This is due to the fact that these specific properties are functionally self-contradictory, as normally appropriate thermal conductivity is achieved through usage of high loading of thermally conductive filler which in turn is known to detrimentally affect both the viscosity characteristics and the adhesive properties. Similarly, reduced level of thermally conductive filler material will typically improve the adhesive properties at the detriment of the thermal conductivity.

In the context of the present disclosure, it has been surprisingly found that pressure sensitive adhesive compositions comprising a boron nitride mixture composition as described above in an amount greater than 15 vol%, based on the volume of thermally conductive pressure sensitive adhesive composition, already provides excellent balance of properties with respect to through-plane thermal conductivity and adhesive performance, while preserving excellent processing capability of the pressure sensitive adhesive composition. Surprisingly, this excellent balance of properties is maintained with an amount of boron nitride mixture composition greater than 20 vol%, greater than 25 vol%, or even greater than 30 vol%, based on the volume of the thermally conductive pressure sensitive adhesive composition.

According to a typical aspect, the thermally conductive pressure sensitive adhesive composition of the present disclosure has a through-plane thermal conductivity of at least 0.4 W/mK, at least 0.6 W/mK, at least 0.8 W/mK, at least 1.0 W/mK, or even at least 1.2 W/mK, when measured according to the test method described in the experimental section.

According to another particular of the present disclosure, the thermally conductive pressure sensitive adhesive composition has a through-plane thermal conductivity comprised between 0.5 and 1.5 W/mK, between 0.6 and 1.4 W/mK, between 0.6 and 1.2 W/mK, or even between 0.8 and 1.2 W/mK, when measured according to the test method described in the experimental section.

In the context of the present disclosure, it has been found that an acrylic-based pressure sensitive adhesive composition comprising a boron nitride mixture composition as detailed above provides outstanding peel adhesion characteristics, while efficiently reducing any viscosity build-up of the filled acrylic-based polymeric composition, even at high filler loading.

According to another particular aspect of the present disclosure, the thermally conductive pressure sensitive adhesive composition has a 90° peel strength value of at least 5 N/cm, at least 8 N/cm, at least 10 N/cm, at least 15 N/cm, at least 20 N/cm, at least 25 N/cm, or even at least 30 N/cm, when measured according to the test method described in the experimental section.

According to still another particular aspect of the present disclosure, the thermally conductive pressure sensitive adhesive composition has a 90° peel strength value of comprised between 5 and 45N/cm, between 6 and 40N/cm, between 8 and 40N/cm, between 10 and 35N/cm, between 15 and 35N/cm, between 20 and 35N/cm, between 25 and 35N/cm, or even between 30 and 35N/cm, when measured according to the test method described in the experimental section.

In a particular aspect, the thermally conductive pressure sensitive adhesive composition according to the present disclosure has a dynamic shear viscosity of less than 40 Pas, less than 30 Pas, less than 20 Pas, less than 15 Pas, or even less than 10 Pas, when measured at a shear rate of 10 s⁻¹ according to the test method described in the experimental section.

In another particular aspect, the thermally conductive pressure sensitive adhesive composition according to the present disclosure has a dynamic shear viscosity comprised between 1 and 40 Pas, between 2 and 30 Pas, between 3 and 25 Pas, between 4 and 20 Pas, between 5 and 20 Pas, between 5 and 15 Pas, or even between 5 and 10 Pas, when measured at a shear rate of 10 s⁻¹ according to the test method described in the experimental section.

In the context of the present disclosure, it has been found that the anisotropic boron nitride agglomerates for use herein are provided with excellent flowability, and therefore processability into the acrylic-based polymeric matrix. It has further been found that the anisotropic boron nitride agglomerates for use herein are provided with excellent agglomeration strength, which then translates into less degradation of the anisotropic boron nitride agglomerates into unwanted fines or fragments of agglomerates, which may otherwise occur during processing and compounding of the agglomerates with the acrylic-based polymeric matrix. The reduced amount of degradation products directly leads to less viscosity build-up in the acrylic-based polymeric matrix.

The thermally conductive pressure sensitive adhesive compositions according to the present disclosure may take any suitable form, depending on the targeted application.

According to a preferred aspect of the present disclosure, the thermally conductive pressure sensitive adhesive composition is in the form of a layer having a thickness greater than 400 µm, greater than 500 µm, greater than 600 µm, greater than 800 µm, greater than 1000 µm, greater than 1200 µm, or even greater than 1500 µm.

According to another preferred aspect of the present disclosure, the thermally conductive pressure sensitive adhesive composition is in the form of a layer having a thickness comprised between 400 and 1500 µm, between 500 and 1200 µm, between 600 and 1000 µm, or even between 700 and 900 µm.

As such, pressure sensitive adhesive layers having a thickness greater than 400 µm may be referred to as relatively thick layers in the art of pressure sensitive adhesive compositions. Unexpectedly, the excellent balance of properties with respect to processing capability, adhesive performance and through-plane thermal conductivity provided by the thermally conductive pressure sensitive adhesive compositions of the present disclosure, is maintained in such thick layers of thermally conductive pressure sensitive adhesive composition. Achieving in particular an excellent balance of through-plane thermal conductivity and processability in layers of thermally conductive pressure sensitive adhesive composition having a thickness greater than 400 µm is a recognized challenge in the adhesive industry. Thick adhesive layers provided with good through-plane thermal conductivity may find beneficial utility in various industrial applications where thick material is needed to provide specific properties/requirements such as e.g. energy distribution, deforming ability, conformability to rough or irregular substrates, dampening or shock-absorbing effect. Furthermore, thick adhesive layers provided with good processing ability may reduce the manufacturing complexity and the associated costs.

In still another aspect, the present disclosure relates to a method of manufacturing a thermally conductive pressure sensitive adhesive, which comprises the steps of:
a) providing a (co)polymerizable material comprising a (meth)acrylate ester monomer; and optionally, a co-monomer having an ethylenically unsaturated group;
b) polymerizing the (co)polymerizable material comprising a (meth)acrylate ester monomer, thereby forming a (co)polymerized material having a coatable viscosity;
c) providing a boron nitride mixture composition comprising:
   i. anisotropic boron nitride agglomerates comprising hexagonal boron nitride primary particles, wherein the hexagonal boron nitride primary particles have an average primary particle size d₅₀ comprised between 1 and 25 µm, wherein the anisotropic boron nitride agglomerates have an average agglomerate size d₅₀ comprised between 50 and 250 µm and an aspect ratio greater than 1.5, and wherein the envelope density of the anisotropic boron nitride agglomerates is greater than 1 g/cm³, when measured according to the test method described in the experimental section; and
   ii. (optionally), free hexagonal boron nitride primary particles having an average primary particle size d₅₀ comprised between 3 and 25µm; and
      whereby the content of the boron nitride mixture composition is greater than 15 vol%, based on the volume of the thermally conductive pressure sensitive adhesive composition;
d) blending the boron nitride mixture composition and the (co)polymerized material, thereby forming a homogeneous coatable composition;
e) coating the coatable composition onto a substrate thereby forming a layer of a thermally conductive pressure sensitive adhesive; and
f) optionally, curing the layer of the thermally conductive pressure sensitive adhesive.

All particular and preferred aspects relating to, in particular, the (co)polymerizable material; the acrylic polymer component; the boron nitride mixture composition, in particular the anisotropic boron nitride agglomerates comprising hexagonal boron nitride primary particles, the free hexagonal boron nitride primary particles, the isotropic hexagonal boron nitride primary particle agglomerates and the hexagonal boron nitride primary particles as described above in the context of the thermally conductive pressure sensitive adhesive composition, are fully applicable to the description of the method of manufacturing a thermally conductive pressure sensitive adhesive of the present disclosure.

In a particular aspect of the method of manufacturing a thermally conductive pressure sensitive adhesive, the curing step is performed by actinic radiation, in particular by UV irradiation.

According to an advantageous aspect of the method of manufacturing a thermally conductive pressure sensitive adhesive, the anisotropic boron nitride agglomerates comprising hexagonal boron nitride primary particles, the optional free hexagonal boron nitride primary particles having an average primary particle size d₅₀ comprised between 3 and 25 µm and the optional isotropic hexagonal boron nitride primary particle agglomerates, are not obtained from the same source of boron nitride particles, in particular not by in-situ pulverization of the same source of boron nitride particles.

Advantageously, the various types of particle agglomerates for use herein do not result from the physical processing of a unique source of boron nitride particles, in particular from a unique source of particle agglomerates having a greater average agglomerate size d₅₀. Advantageously still, the various types of particle agglomerates for use herein do not result from in-situ physical processing steps, such as e.g. pulverization or any other particle size adjustment or fractioning processing steps.

According to a beneficial aspect of the method of manufacturing a thermally conductive pressure sensitive adhesive, the various types of particle agglomerates for use herein originate from distinct sources of boron nitride particles.

In an advantageous aspect of the present disclosure, the method of manufacturing a thermally conductive pressure sensitive adhesive is free of any (in-situ) physical processing steps, such as e.g. pulverization or any other particle size adjustment or fractioning processing steps, aimed at producing the various types of particle agglomerates for use herein from a unique source of boron nitride particles.

According to a particular aspect of the method of manufacturing a thermally conductive pressure sensitive adhesive, the (meth)acrylate ester monomer is selected from the group consisting of iso-octyl (meth)acrylate, 2-ethylhexyl (meth)acrylate, 2-propylheptyl (meth)acrylate, 2-octyl (meth)acrylate, butyl acrylate, and any combinations or mixtures thereof; more preferably from the group consisting of iso-octyl acrylate, 2-ethylhexyl acrylate, 2-octyl acrylate, and 2-propylheptyl acrylate.

According to another particular aspect of the method of manufacturing a thermally conductive pressure sensitive adhesive, the co-monomer having an ethylenically unsaturated group is a polar comonomer Preferably, the co-monomer having an ethylenically unsaturated group is a polar acrylate, more preferably selected from the group consisting of acrylic acid, methacrylic acid, itaconic acid, hydroxyalkyl acrylates, acrylamides and substituted acrylamides, acrylamines and substituted acrylamines and any combinations or mixtures thereof. Even more preferably, the co-monomer having an ethylenically unsaturated group for use herein is selected from the group consisting of acrylic acid, methacrylic acid, itaconic acid and hydroxyalkyl acrylates.

In a preferred aspect of the method of manufacturing a thermally conductive pressure sensitive adhesive, the (co)polymerizable material for making the acrylic polymer component for use herein, comprises a mixture of 2-ethylhexyl acrylate and acrylic acid monomer units.

In still another aspect, the present disclosure is further directed to the use of a thermally conductive pressure sensitive adhesive composition as described above for industrial applications, in particular for thermal management applications. In a particular aspect, the thermally conductive pressure sensitive adhesive composition of the present disclosure may be used for thermal interface management.

The thermally conductive pressure sensitive adhesive compositions of the present disclosure are particularly suited for transportation and electronic market applications, in particular automotive and aerospace applications, due to the excellent balance of adhesion properties and through-plane thermal conductivity provided.

The thermally conductive pressure sensitive adhesive compositions of the present disclosure, in particular pressure sensitive adhesive composition layers having a thickness greater than 400 µm, are outstandingly suitable for battery pack bonding, in particular as a thermally conductive member for bonding battery cells to active cooling elements or heat sinks.

In a particular aspect, the thermally conductive pressure sensitive adhesive composition may be used for bonding pack of cells in a battery pack device, in particular in high powered batteries used for automotive and aerospace applications. Pressure sensitive adhesive composition layers according to the present disclosure and having a thickness greater than 400 µm may beneficially exploit advantageous properties such as e.g. energy distribution, deforming ability, conformability to rough or irregular substrates, dampening effect, vibration or shock-absorbing effect.
Item 1 is a thermally conductive pressure sensitive adhesive composition, comprising:
   a) an acrylic polymer component; and
   b) a boron nitride mixture composition comprising:
      i. anisotropic boron nitride agglomerates comprising hexagonal boron nitride primary particles, wherein the hexagonal boron nitride primary particles have an average primary particle size d₅₀ comprised between 1 and 50 µm, wherein the anisotropic boron nitride agglomerates have an average agglomerate size d₅₀ comprised between 50 and 250 µm and an aspect ratio greater than 1.5, and wherein the envelope density of the anisotropic boron nitride agglomerates is greater than 1 g/cm³, when measured according to the test method described in the experimental section; and
      ii. (optionally), free hexagonal boron nitride primary particles having an average primary particle size d₅₀ comprised between 3 and 50 µm; and
   wherein the content of the boron nitride mixture composition is greater than 15 vol%, based on the volume of the thermally conductive pressure sensitive adhesive composition.
Item 2 is a thermally conductive pressure sensitive adhesive composition according to item 1, wherein the envelope density of the anisotropic boron nitride agglomerates is greater than 1.2 g/cm³, greater than 1.4 g/cm³, greater than 1.5 g/cm³, greater than 1.7 g/cm³, greater than 1.8 g/cm³, or even greater than 2.0 g/cm³, when measured according to the test method described in the experimental section.
Item 3 is a thermally conductive pressure sensitive adhesive composition according to any of item 1 or 2, wherein the envelope density of the anisotropic boron nitride agglomerates is comprised between 1.2 and 2.2 g/cm³, between 1.4 and 2.2 g/cm³, between 1.5 and 2.0 g/cm³, or even between 1.7 and 2.0 g/cm³, when measured according to the test method described in the experimental section.
Item 4 is a thermally conductive pressure sensitive adhesive composition according to any of the preceding items, wherein the anisotropic boron nitride agglomerates have an average agglomerate size d₅₀ comprised between 60 and 220 µm, between 80 and 200 µm, between 80 and 180 µm, between 90 and 180 µm, between 90 and 160 µm, between 90 and 140 µm, or even between 90 and 120 µm.
Item 5 is a thermally conductive pressure sensitive adhesive composition according to any of the preceding items, wherein the anisotropic boron nitride agglomerates have an aspect ratio greater than 2, greater than 3, or even greater than 4.
Item 6 is a thermally conductive pressure sensitive adhesive composition according to any of the preceding items, wherein the anisotropic boron nitride agglomerates have an aspect ratio no greater than 10, no greater than 8, no greater than 7, no greater than 5, or even no greater than 4.
Item 7 is a thermally conductive pressure sensitive adhesive composition according to any of the preceding items, wherein the anisotropic boron nitride agglomerates have an aspect ratio comprised between 1.7 and 10, between 2.0 and 8.0, between 2.0 and 6.0, or even between 3.0 and 5.0.
Item 8 is a thermally conductive pressure sensitive adhesive composition according to any of the preceding items, wherein the anisotropic boron nitride agglomerates have a specific surface area (SSA) measured by BET no greater than 10 m²/g, no greater than 8 m²/g, no greater than 7 m²/g, no greater than 5 m²/g, or even no greater than 4 m²/g.
Item 9 is a thermally conductive pressure sensitive adhesive composition according to any of the preceding items, wherein the anisotropic boron nitride agglomerates have a specific surface area (SSA) measured by BET comprised between 1.5 and 10 m²/g, between 1.5 and 8.0 m²/g, between 2.0 and 7.0 m²/g, between 2.5 and 6.5 m²/g, between 2.5 and 6.0 m²/g, between 2.5 and 5.5 m²/g, between 2.5 and 5.0 m²/g, between 3.0 and 4.5 m²/g or even between 3.0 and 4.0 m²/g.
Item 10 is a thermally conductive pressure sensitive adhesive composition according to any of the preceding items, wherein the thickness of the anisotropic boron nitride agglomerates are comprised between 5 and 100 µm, between 5 and 80 µm, between 10 and 60 µm, between 15 and 50 µm, between 15 and 45 µm, between 20 and 40 µm, or even between 25 and 35 µm.
Item 11 is a thermally conductive pressure sensitive adhesive composition according to any of the preceding items, wherein the hexagonal boron nitride primary particles comprised in the anisotropic boron nitride agglomerates have an average primary particle size d₅₀ comprised between 1 and 40 µm, between 1 and 30 µm, between 1 and 25 µm, between 1 and 20 µm, between 5 and 20 µm, between 8 and 18 µm, between 10 and 18 µm, between 12 and 18 µm, or even between 13 and 17 µm.
Item 12 is a thermally conductive pressure sensitive adhesive composition according to any of the preceding items, wherein the hexagonal boron nitride primary particles comprised in the anisotropic boron nitride agglomerates have an average primary particle size d₅₀ comprised between 1 and 40 µm, between 1 and 30 µm, between 1 and 25 µm, between 1 and 20 µm, between 1 and 15 µm, between 1 and 10 µm, between 1 and 8 µm, between 2 and 8 µm, between 2 and 6 µm, between 1 and 5 µm, or even between 2 and 4 µm.
Item 13 is a thermally conductive pressure sensitive adhesive composition according to any of the preceding items, wherein the anisotropic boron nitride agglomerates are free of organic or inorganic binder.
Item 14 is a thermally conductive pressure sensitive adhesive composition according to any of the preceding items, wherein the anisotropic boron nitride agglomerates are free of surface treatment, in particular free of surface functionalization.
Item 15 is a thermally conductive pressure sensitive adhesive composition according to any of the preceding items, wherein the anisotropic boron nitride agglomerates are free of fines fraction, in particular free of fines fraction of non-agglomerated material having a size of less than 100 µm, or even less than 50 µm.
Item 16 is a thermally conductive pressure sensitive adhesive composition according to any of the preceding items, wherein the hexagonal boron nitride primary particles forming the anisotropic boron nitride agglomerates are agglomerated with one another with a preferred orientation, and wherein the anisotropic boron nitride agglomerates have a flake shape.
Item 17 is a thermally conductive pressure sensitive adhesive composition according to any of the preceding items, wherein the hexagonal boron nitride primary particles forming the anisotropic boron nitride agglomerates are agglomerated with one another with a preferred orientation in such a way that the planes of the hexagonal boron nitride primary particles are essentially aligned parallel to one another.
Item 18 is a thermally conductive pressure sensitive adhesive composition according to any of the preceding items, wherein the anisotropic boron nitride agglomerates are obtained by one or several compaction steps.
Item 19 is a thermally conductive pressure sensitive adhesive composition according to item 18, wherein the compaction step(s) is followed by a thermal treatment, preferably performed at a temperature of up to 2300°C, more preferably at a temperature comprised between 1200 and 2050°C, between 1400 and 2000°C, or even between 1600 and 1950°C.
Item 20 is a thermally conductive pressure sensitive adhesive composition according to any of the preceding items, wherein the free hexagonal boron nitride primary particles have an average primary particle size d₅₀ comprised between 3 and 45 µm, between 3 and 40 µm, between 4 and 35 µm, between 5 and 30 µm, between 5 and 25 µm, between 10 and 20 µm, between 10 and 18 µm, between 12 and 18 µm, or even between 13 and 16 µm.
Item 21 is a thermally conductive pressure sensitive adhesive composition according to any of the preceding items, wherein the boron nitride mixture composition further comprises isotropic hexagonal boron nitride primary particle agglomerates having an average agglomerate size d₅₀ comprised between 60 and 420 µm.
Item 22 is a thermally conductive pressure sensitive adhesive composition according to item 21, wherein the isotropic hexagonal boron nitride primary particle agglomerates have an average agglomerate size d₅₀ comprised between 60 and 420 µm, between 60 and 400 µm, between 60 and 300 µm, between 60 and 200 µm, between 60 and 150 µm, between 70 and 150 µm, between 70 and 120 µm, between 70 and 100 µm, or even between 80 and 100 µm.
Item 23 is a thermally conductive pressure sensitive adhesive composition according to item 21, wherein the isotropic hexagonal boron nitride primary particle agglomerates have an average agglomerate size d₅₀ comprised between 60 and 400 µm, between 60 and 300 µm, between 80 and 250 µm, between 80 and 200 µm, between 90 and 180 µm, between 100 and 160 µm, between 100 and 150 µm, or even between 110 and 150 µm.
Item 24 is a thermally conductive pressure sensitive adhesive composition according to any of the preceding items, wherein the anisotropic boron nitride agglomerates comprising hexagonal boron nitride primary particles, the optional free hexagonal boron nitride primary particles having an average primary particle size d₅₀ comprised between 3 and 25 µm, and the optional isotropic hexagonal boron nitride primary particle agglomerates, are not obtained from the same source of boron nitride particles, in particular not by in-situ pulverization of the same source of boron nitride particles.
Item 25 is a thermally conductive pressure sensitive adhesive composition according to any of the preceding items, which comprises a boron nitride mixture composition comprising:
   i. anisotropic boron nitride agglomerates comprising hexagonal boron nitride primary particles and having an average agglomerate size d₅₀ comprised between 50 and 250 µm, between 60 and 220 µm, between 80 and 200 µm, between 80 and 180 µm, between 90 and 180 µm, between 90 and 160 µm, between 90 and 140 µm, or even between 90 and 120 µm;
   ii. free hexagonal boron nitride primary particles having an average primary particle size d₅₀ comprised between 3 and 25µm, between 5 and 25 µm, between 10 and 20 µm, between 10 and 18 µm, between 12 and 18 µm, or even between 13 and 16 µm; and
   iii. optionally, isotropic hexagonal boron nitride primary particle agglomerates having an average agglomerate size d₅₀ comprised between 60 and 420 µm, between 60 and 300 µm, between 60 and 200 µm, or even between 70 and 150 µm.
Item 26 is a thermally conductive pressure sensitive adhesive composition according to any of the preceding items, wherein the hexagonal boron nitride primary particles have a platelet shape, in particular a lamellar platelet shape.
Item 27 is a thermally conductive pressure sensitive adhesive composition according to any of the preceding items, which comprises a boron nitride mixture composition in an amount greater than 18 vol%, greater than 20 vol%, greater than 22 vol%, greater than 24 vol%, greater than 26 vol%, or even greater than 28 vol%, based on the volume of the thermally conductive pressure sensitive adhesive composition.
Item 28 is a thermally conductive pressure sensitive adhesive composition according to any of the preceding items, which comprises a boron nitride mixture composition in an amount no greater than 45 vol%, no greater than 40 vol%, no greater than 35 vol%, or even no greater than 30 vol%, based on the volume of thermally conductive pressure sensitive adhesive composition.
Item 29 is a thermally conductive pressure sensitive adhesive composition according to any of the preceding items, which comprises a boron nitride mixture composition in an amount comprised between 15 and 45 vol%, between 16 and 40 vol%, between 18 and 35 vol%, between 20 and 35 vol%, between 22 and 32 vol%, between 24 and 30 vol%, or even between 24 and 28 vol%, based on the volume of thermally conductive pressure sensitive adhesive composition.
Item 30 is a thermally conductive pressure sensitive adhesive composition according to any of the preceding items, which comprises the anisotropic boron nitride agglomerates in an amount greater than 10 vol%, greater than 15 vol%, greater than 20 vol%, or even greater than 25 vol%, based on the volume of thermally conductive pressure sensitive adhesive composition.
Item 31 is a thermally conductive pressure sensitive adhesive composition according to any of the preceding items, which comprises the anisotropic boron nitride agglomerates in an amount comprised between 10 and 35 vol%, between 10 and 30 vol%, between 15 and 30 vol%, between 20 and 30 vol%, or even between 25 and 30 vol%, based on the volume of thermally conductive pressure sensitive adhesive composition.
Item 32 is a thermally conductive pressure sensitive adhesive composition according to any of the preceding items, which comprises the anisotropic boron nitride agglomerates in an amount comprised between 30 and 95 wt%, between 40 and 90 wt%, between 60 and 90 wt%, between 70 and 90 wt%, or even between 80 and 90 wt%, based on the weight of the boron nitride mixture composition.
Item 33 is a thermally conductive pressure sensitive adhesive composition according to any of the preceding items, which comprises the free hexagonal boron nitride primary particles in an amount greater than 1 vol%, greater than 2 vol%, greater than 3 vol%, greater than 4 vol%, or even greater than 5 vol%, based on the volume of the thermally conductive pressure sensitive adhesive composition.
Item 34 is a thermally conductive pressure sensitive adhesive composition according to any of the preceding items, which comprises the free hexagonal boron nitride primary particles in an amount comprised between 1 and 10 vol%, between 1 and 8 vol%, between 2 and 8 vol%, between 3 and 8 vol%, or even between 3 and 6 vol%, based on the volume of thermally conductive pressure sensitive adhesive composition.
Item 35 is a thermally conductive pressure sensitive adhesive composition according to any of the preceding items, which comprises the free hexagonal boron nitride primary particles in an amount comprised between 1 and 25 wt%, between 1 and 20 wt%, between 2 and 15 wt%, between 3 and 10 wt%, or even between 5 and 10 wt%, based on the weight of the boron nitride mixture composition.
Item 36 is a thermally conductive pressure sensitive adhesive composition according to any of the preceding items, wherein the anisotropic boron nitride agglomerates, and the optional free hexagonal boron nitride primary particles and/or the optional isotropic hexagonal boron nitride primary particle agglomerates are, at least partially, in direct physical contact to each other within the thermally conductive pressure sensitive adhesive composition.
Item 37 is a thermally conductive pressure sensitive adhesive composition according to any of the preceding items, which further comprises additional filler material, and wherein the filler material is preferably selected from the group consisting of particulate material comprising metal oxides, metal hydroxides, metal silicates, nitrides, carbides, or any combinations or mixtures thereof.
Item 38 is a thermally conductive pressure sensitive adhesive composition according to item 37, wherein the filler material comprises aluminum oxides, aluminum hydroxides, silica, aluminum nitrates, aluminum nitrides, aluminum silicates, magnesium oxides, magnesium hydroxides, silicon carbides, or any combinations or mixtures thereof.
Item 39 is a thermally conductive pressure sensitive adhesive composition according to any of the preceding items, wherein the acrylic polymer component comprises the reaction product of a (co)polymerizable material comprising a (meth)acrylate ester monomer, and optionally, a co-monomer having an ethylenically unsaturated group.
Item 40 is a thermally conductive pressure sensitive adhesive composition according to item 39, wherein the (meth)acrylate ester monomer is selected from the group consisting of iso-octyl (meth)acrylate, 2-ethylhexyl (meth)acrylate, 2-propylheptyl (meth)acrylate, 2-octyl (meth)acrylate, butyl acrylate, and any combinations or mixtures thereof.
Item 41 is a thermally conductive pressure sensitive adhesive composition according to any of item 39 or 40, wherein the (meth)acrylate ester monomer is selected from the group consisting of iso-octyl acrylate, 2-ethylhexyl acrylate, 2-octyl acrylate, and 2-propylheptyl acrylate.
Item 42 is a thermally conductive pressure sensitive adhesive composition according to any of items 39 to 41, wherein the co-monomer having an ethylenically unsaturated group is a polar comonomer, preferably a polar acrylate, more preferably selected from the group consisting of acrylic acid, methacrylic acid, itaconic acid, hydroxyalkyl acrylates, acrylamides and substituted acrylamides, acrylamines and substituted acrylamines, and any combinations or mixtures thereof.
Item 43 is a thermally conductive pressure sensitive adhesive composition according to any of items 39 to 42, wherein the co-monomer having an ethylenically unsaturated group is selected from the group consisting of acrylic acid, methacrylic acid, itaconic acid, isobornyl acrylate, and hydroxyalkyl acrylates.
Item 44 is a thermally conductive pressure sensitive adhesive composition according to any of the preceding items, in the form of a layer having a thickness greater than 400 µm, greater than 500 µm, greater than 600 µm, greater than 800 µm, greater than 1000 µm, greater than 1200 µm, or even greater than 1500 µm.
Item 45 is a thermally conductive pressure sensitive adhesive composition according to any of the preceding items, in the form of a layer having a thickness comprised between 400 and 1500 µm, between 500 and 1200 µm, between 600 and 1000 µm, or even between 700 and 900 µm.
Item 46 is a thermally conductive pressure sensitive adhesive composition according to any of the preceding items, which has a through-plane thermal conductivity of at least 0.4 W/mK, at least 0.6 W/mK, at least 0.8 W/mK, at least 1.0 W/mK, or even at least 1.2 W/mK, when measured according to the test method described in the experimental section.
Item 47 is a thermally conductive pressure sensitive adhesive composition according to any of the preceding items, which has a through-plane thermal conductivity comprised between 0.5 and 1.5 W/mK, between 0.6 and 1.4 W/mK, between 0.6 and 1.2 W/mK, or even between 0.8 and 1.2 W/mK, when measured according to the test method described in the experimental section.
Item 48 is a thermally conductive pressure sensitive adhesive composition according to any of the preceding items, which has a 90° peel strength value of at least 5 N/cm, at least 8 N/cm, at least 10 N/cm, at least 15 N/cm, at least 20 N/cm, at least 25 N/cm, or even at least 30 N/cm, when measured according to the test method described in the experimental section.
Item 49 is a thermally conductive pressure sensitive adhesive composition according to any of the preceding items, which has a 90° peel strength value of comprised between 5 and 45N/cm, between 6 and 40N/cm, between 8 and 40N/cm, between 10 and 35N/cm, between 15 and 35N/cm, between 20 and 35N/cm, between 25 and 35N/cm, or even between 30 and 35N/cm, when measured according to the test method described in the experimental section.
Item 50 is a thermally conductive pressure sensitive adhesive composition according to any of the preceding items, which has a dynamic shear viscosity of less than 40 Pas, less than 30 Pas, less than 20 Pas, less than 15 Pas, or even less than 10 Pas, when measured at a shear rate of 10 s⁻¹ according to the test method described in the experimental section.
Item 51 is a thermally conductive pressure sensitive adhesive composition according to any of the preceding items, which has a dynamic shear viscosity comprised between 1 and 40 Pas, between 2 and 30 Pas, between 3 and 25 Pas, between 4 and 20 Pas, between 5 and 20 Pas, between 5 and 15 Pas, or even between 5 and 10 Pas, when measured at a shear rate of 10 s⁻¹ according to the test method described in the experimental section.
Item 52 is a method of manufacturing a thermally conductive pressure sensitive adhesive, which comprises the steps of:
   a) providing a (co)polymerizable material comprising a (meth)acrylate ester monomer; and optionally, a co-monomer having an ethylenically unsaturated group;
   b) polymerizing the (co)polymerizable material comprising a (meth)acrylate ester monomer, thereby forming a (co)polymerized material having a coatable viscosity;
   c) providing a boron nitride mixture composition comprising:
      i. anisotropic boron nitride agglomerates comprising hexagonal boron nitride primary particles, wherein the hexagonal boron nitride primary particles have an average primary particle size d₅₀ comprised between 1 and 25 µm, wherein the anisotropic boron nitride agglomerates have an average agglomerate size d₅₀ comprised between 50 and 250 µm and an aspect ratio greater than 1.5, and wherein the envelope density of the anisotropic boron nitride agglomerates is greater than 1 g/cm³, when measured according to the test method described in the experimental section; and
      ii. (optionally), free hexagonal boron nitride primary particles having an average primary particle size d₅₀ comprised between 3 and 25µm; and
         whereby the content of the boron nitride mixture composition is greater than 15 vol%, based on the volume of the thermally conductive pressure sensitive adhesive composition;
   d) blending the boron nitride mixture composition and the (co)polymerized material, thereby forming a homogeneous coatable composition;
   e) coating the coatable composition onto a substrate thereby forming a layer of a thermally conductive pressure sensitive adhesive; and
   f) optionally, curing the layer of the thermally conductive pressure sensitive adhesive.
Item 53 is a method according to item 52, wherein the curing step is performed by actinic radiation, in particular by UV irradiation.
Item 54 is a method according to any of item 52 or 53, wherein the anisotropic boron nitride agglomerates comprising hexagonal boron nitride primary particles, the optional free hexagonal boron nitride primary particles having an average primary particle size d₅₀ comprised between 3 and 25 µm and the optional isotropic hexagonal boron nitride primary particle agglomerates, are not obtained from the same source of boron nitride particles, in particular not by in-situ pulverization of the same source of boron nitride particles.
Item 55 is a method according to any of items 52 to 54, wherein the (co)polymerizable material comprising a (meth)acrylate ester monomer, and optionally, a co-monomer having an ethylenically unsaturated group is as described in any of items 39 to 43.
Item 56 is a method according to any of items 52 to 55, wherein the boron nitride mixture composition is as described in any of items 1 to 36.
Item 57 is the use of a thermally conductive pressure sensitive adhesive composition according to any of items 1 to 51 for industrial applications, in particular for thermal management applications.
Item 58 is the use of a thermally conductive pressure sensitive adhesive composition according to any of items 1 to 51 for battery pack bonding, in particular as a thermally conductive member for bonding battery cells, in particular for bonding pack of cells in a battery pack device.

### EXAMPLES

The present disclosure is further illustrated by the following examples. These examples are merely for illustrative purposes only and are not meant to be limiting on the scope of the appended claims.

### Test methods and procedures:

### Envelope density of hexagonal boron nitride primary particle agglomerates

The envelope density measurements of hexagonal boron nitride primary particle agglomerates are made by means of Mercury Intrusion Porosimetry using Porosimeter AutoPore® IV 9500 (available from Micromeritics Instrument Corporation, USA). The density measurements are reported at a mercury infiltration pressure of 28kPA (4.00 psia).

### Through-plane thermal conductivity (λ)

The through-plane thermal conductivity (λ) of thermally conductive pressure sensitive adhesive samples is calculated according to equation: λ = a • ρ • cP, whereby thermal conductivity (λ) is expressed in (W/m·K), thermal diffusivity (a) is expressed in (mm²/s), specific heat (cP) is expressed in (J/g/K) and density (ρ) is expressed in (g/cm³). The values of parameters (a) and (cP) are simultaneously determined using Flash Apparatus Nanoflash LFA 447 (Netzsch, Selb Germany) according to Test Method ASTM E 1461/DIN EN 821 using the flash method at room temperature. The test samples having the following dimension 10 mm (length) x 10 mm (width) x 2 mm (thickness) are prepared by lamination of two identical samples having the following dimension 10 mm (length) x 10 mm (width) x 1 mm (thickness).

### Specific surface area (SSA) measured by BET

The specific surface area of the anisotropic boron nitride agglomerates are determined according to Test Method ISO 9277:2010.

### 90°-Peel-test at 300 mm/min (according to Test Method AFERA 5001)

Thermally conductive pressure sensitive adhesive strips according to the present disclosure and having a width of 13 mm and a length > 175 mm are cut out in the machine direction from the sample material.
For test sample preparation the liner is first removed from the one adhesive side and placed on an aluminum strip having the following dimension 22 x 1.6 cm. Then, the adhesive coated side of each PSA strip is placed, after the liner is removed, with its adhesive side down on a clean test panel using light finger pressure. Next, the test samples are rolled twice in each direction with a standard FINAT test roller (weight 6.8 kg) at a speed of approximately 10 mm per second to obtain intimate contact between the adhesive mass and the surface. After applying the pressure sensitive adhesive strips to the test panel, the test samples are allowed to dwell 20 minutes or 72 hours at ambient room temperature (23°C +/- 2°C, 50% relative humidity +/-5%) prior to testing.
For peel testing the test samples are in a first step clamped in the lower movable jaw of a Zwick tensile tester (Model Z020 commercially available from Zwick/Roell GmbH, Ulm, Germany). The thermally conductive pressure sensitive adhesive strips are folded back at an angle of 90° and their free ends grasped in the upper jaw of the tensile tester in a configuration commonly utilized for 90° peel measurements. The tensile tester is set at 300 mm per minute jaw separation rate. Test results are expressed in Newton per 10 mm (N/10 mm). The quoted peel values are the average of two 90°-peel measurements.

### Static shear test at room temperature with 1000 g hanging weights (according to Test Method AFERA 5012)

The static shear is a measure of the cohesiveness or internal strength of an adhesive. It is measured in units of time (minutes) required to pull a standard area of adhesive sheet material from a stainless steel test panel under stress of a constant, standard load.
A thermally conductive pressure sensitive adhesive film stripe of 13 mm width and 25 mm length is cut out in machine direction from the sample and the specimen placed on a clean steel test panel. The opposing side of the test sample is then placed on an aluminium plate having a hole for fixing the weight using light finger pressure. A 1000 g weight is placed onto the test sample to obtain intimate contact between the pressure sensitive adhesive mass and the substrate surface (test plate). After applying the pressure sensitive adhesive film stripe (specimen) to the test plate, the test plate is allowed a dwell time at room temperature (23°C +/-2°C, 50% relative humidity +/-5%) for a period of 60 min before testing.
The test panel is placed in a shear holding device. After a 10 minute dwell time at room temperature, the 1000 g load is hung into the hole of the aluminum test panels. The timer is started. The results are recorded in minutes until failure and are the average of two shear measurements. A recorded time of "10000+" indicates that the tape does not fail after 10000 min, when the test is stopped.

### Dynamic shear viscosity

The dynamic shear viscosity measurements of the thermally conductive pressure sensitive adhesive samples are carried out with an Anton Paar MCR 502 Rotational Rheometer equipped with P-PTD (Plate Peltier Temperature Device) 200 including Peltier Hood and PP25 parallel-plate measuring system. All the rotational shear experiments are performed at 25°C, in the shear rate range of 0.1 to 100 s⁻¹, on thermally conductive pressure sensitive adhesive samples having a boron nitride mixture composition content of 30 vol%, based on the volume of the thermally conductive pressure sensitive adhesive composition. The dynamic shear viscosity measurements are expressed in (Pas).

### Test panels/substrates used for testing:

a) Stainless steel test panels according to EN1939:20, surface 1.4301 mirror-like (commercially available from Rocholl GmbH) having a dimension of 150 mm x 50 mm x 2 mm are the selected panels for all 90° peel tests.
   Prior to testing the stainless steel panels are cleaned according to the following described procedure. First, the stainless steel panels are wiped once with MEK, then with heptane followed by a last wipe with MEK and thereafter dried with a paper tissue.
b) Aluminum test panels in accordance with ASTM B211 having a dimension of 50 mm x 25 mm x 1 mm. Prior to the preparation of a test assembly, the aluminium panels are roughened using ScotchBrite 4774 (commercially available by 3M) and afterwards wiped once with isopropyl alcohol. Drying is done using a paper tissue.

### Materials employed:

In the examples, the following raw materials are used:
**2-Ethyl hexyl acrylate** (C8-acrylate, 2-EHA): is an ester of 2-ethylalcohol and acrylic acid which is obtained from BASF SE, Germany.
**Isooctylacrylate** (C8-acrylate, IOA) is an ester of isooctylalcohol and acrylic acid which is obtained from 3M Hilden, Germany (IOA).
**Acrylic acid** (AA) is obtained from Arkema, Italy.
**1,6-Hexanedioldiacrylate** (HDDA) is a fast curing diacrylate obtained from BASF SE, Germany.
**Omnirad BDK** 2,2-dimethoxy-2-phenylacetophenone is a UV-initiator for radical polymerization, commercially available from iGm resins, Waalwijk Netherlands.
**Aerosil R-972** are hydrophobic fumed silica particles, available from Evonik, Germany. **3M Boron Nitride Cooling Filler Platelets 015** (CFP 015)- hexagonal boron nitride particles having an average primary particle size d₅₀ comprised between 13 and 16 µm, commercially available from the 3M Company.
**3M Boron Nitride Cooling Filler Flakes 200-15** (CFF 200-15) - anisotropic hexagonal boron nitride particle agglomerates having an average primary particle size d₅₀ comprised between 10 and 20 µm, commercially available from the 3M Company.
**3M Boron Nitride Cooling Filler Flakes 200-3-W** (CFF 200-3) - anisotropic hexagonal boron nitride particle agglomerates having an average primary particle size d₅₀ comprised between 1 and 5 µm, commercially available from the 3M Company.
**3M Boron Nitride Cooling Filler Agglomerates 100-200** (CFA 100-200) - 50wt%/50wt% blend of 3M Boron Nitride Cooling Filler Agglomerates 100 and 200, as described above - hexagonal boron nitride particle (spherical) agglomerates having an average primary particle size d₅₀ comprised between 65 and 150 µm.

### Preparation of the curable precursor of the acrylic polymer components:

### Preparation of the curable precursor of the acrylic polymer component:

The liquid precursor of the acrylic polymer component, later referred to as APC, is prepared by combining the 90wt% of IOA and 10 wt% of acrylic acid with 0.04 pph of Omnirad as a photoinitiator in a glass vessel. Before the UV exposure is initiated the mixture is flushed 10 minutes with nitrogen and nitrogen is also bubbled into the mixture the whole time until the polymerization process is stopped by adding air to the syrup. All the time the mixture is stirred with a propeller stirrer (300 U/min) and the reaction is stopped when a viscosity of about 500 mPas is reached (when measured with a Brookfield viscosimeter, T = 25 °C, spindle 4, 12 rpm). Additional 0.16 ppH Omnirad BDK and 0.12 ppH HDDA crosslinker, are added to the syrup and mixed until they have dissolved / dispersed.

### Preparation of the thermally conductive pressure sensitive adhesive compositions:

The selected amount of boron nitride mixture is incorporated into the corresponding liquid precursor of acrylic polymer component (APC) and the compound is homogenized by putting the material on a rotary mixer for about 14 hours at room temperature. Before processing, the materials are degassed under vacuum for 15 minutes using a dessicator and then gently stirred again with wooden spoon to regain homogeneous mixtures.

The exact formulations of the curable precursors of the thermally conductive pressure sensitive adhesive compositions are listed in Table 1 below.

The curable precursors are knife-coated and the resulting adhesive layer thickness is set to about 800 µm using the installed regulation caliper. Curing is effected in a two stage UV-curing station both from the top, i.e. in a direction towards the exposed curable precursor layer, and bottom side. The radiation is provided by fluorescent lamps at a wavelength between 300 - 400 nm with a maximum at 351 nm. The total radiation intensity irradiated cumulatively from top and bottom is 4.8 mW/cm² by zone.

### Examples:

### Experiments 1: Adhesion and thermal conductivity performance.

### Formulations of the curable precursors used for making the thermally conductive pressure sensitive adhesives

The formulations of the curable precursors used in Experiments 1 for making the thermally conductive pressure sensitive adhesives are listed in Table 1 below. Table 1 contains comparative example 1, later referred to as C1, which is a curable precursor not comprising any anisotropic hexagonal boron nitride primary particle agglomerates according to the present disclosure, but instead comprises a hexagonal boron nitride primary particle agglomerates having a substantially spherical shape.

**Table 1: Exemplary formulations with adhesion and through-plane thermal conductivity performance.**

| Ingredients (in g) | C1 | Ex.1 | Ex.2 |
|---|---|---|---|
| APC | 115 | 115 | 115 |
| CFP 015 | 16 | 16 | 16 |
| CFA 100-200 | 65 | - | - |
| CFF 200-15 | - | 81 | - |
| CFF 200-3 | - | - | 85 |
| Aerosil R-972 | 3 | 3 | 3 |
| Vol% BN Fillers | 24 | 27 | 28 |
| | | | |
| Through-plane thermal conductivity (in W/m/K) | 1.7 | 0.98 | 1.02 |
| 90° Peel stainless steel, 72 h (in N/cm) | 17.3 | 31.8 | 11.2 |
| Static shear 1000 g / 23°C (in min) | 1914 | 9390 | > 10000 |

As can be seen from the results in Table 1, the thermally conductive pressure sensitive adhesive compositions according to the present disclosure (Ex.1 and Ex.2) provide excellent balance of adhesion and through-plane thermal conductivity properties.

### Experiments 2: Viscosity build-up prevention performance.

### Formulations of the curable precursors used for making the thermally conductive pressure sensitive adhesives

The formulations of the curable precursors used in Experiments 2 for making the thermally conductive pressure sensitive adhesives are listed in Table 2 below. Table 2 contains comparative examples 2 and 3, later referred to as C2 and C3, which are curable precursors not comprising any anisotropic hexagonal boron nitride primary particle agglomerates according to the present disclosure, but instead comprise respectively only hexagonal boron nitride primary particles (C2) and hexagonal boron nitride primary particle agglomerates having a substantially spherical shape (C3).

**Table 2: Exemplary formulations with dynamic shear viscosity measurements.**

| Ingredients (in g) | C2 | C3 | Ex.3 | Ex.4 | Ex.5 |
|---|---|---|---|---|---|
| APC | 30 | 30 | 30 | 30 | 30 |
| CFP 015 | 29 | - | - | - | - |
| CFA 100-200 | - | 29 | - | - | - |
| CFF 200-15 | - | - | 29 | | 7 |
| CFF 200-3 | - | - | - | 29 | 22 |
| Vol% BN Fillers | 30 | 30 | 30 | 30 | 30 |
| | | | | | |
| Dynamic shear viscosity, at 10 s⁻¹ (in η/Pas) | 44 | 152 | 9 | 16 | 12 |

As can be seen from the results in Table 2, the thermally conductive pressure sensitive adhesive compositions according to the present disclosure (Ex.3 to Ex.5) provide improved viscosity build-up prevention performance, when compared to compositions not according to the invention (C2 and C3) at similar filler loading.

### Experiments 3: Stability performance.

### Formulations of the curable precursors used for making the thermally conductive pressure sensitive adhesives

The formulations of the curable precursors used in Experiments 3 for making the thermally conductive pressure sensitive adhesives are listed in Table 3 below. Table 3 contains comparative example 4, later referred to as C4, which is a curable precursor not comprising any anisotropic hexagonal boron nitride primary particle agglomerates according to the present disclosure, but instead comprises hexagonal boron nitride primary particle agglomerates having a substantially spherical shape.

**Table 3: Exemplary formulations with stability performance.**

| Ingredients (in g) | C4 | Ex.6 | Ex.7 |
|---|---|---|---|
| APC | 30 | 30 | 30 |
| CFA 100-200 | 21.5 | - | - |
| CFF 200-15 | - | 29.5 | |
| CFF 200-3 | - | - | 28 |
| Vol% BN Fillers | 24 | 30 | 29 |
| | | | |
| Visual appearance immediately after preparation | Inhomogeneous composition. Only heaps of material present. | Homogenous composition. No phase separation. | Homogenous composition. No phase separation. |
| Visual appearance after 4 days storage (23°C, 50% relative humidity) | Still inhomogeneous composition. Heaps of material still present. | Overall homogeneous composition. Slight phase separation. | Overall homogeneous composition. Slight phase separation. |
| Visual appearance after 25 days storage (23°C, 50% relative humidity) | Still inhomogeneous composition. Heaps of material still present. | Phase separation visible. Clear polymeric component on top. | Phase separation visible. Clear polymeric component on top. |
| Coatability after 25 days storage (23°C, 50% relative humidity) | Uncoatable composition. | After rehomogenization, very good coating quality. | After rehomogenization, very good coating quality. |

As can be seen from the results in Table 3, the thermally conductive pressure sensitive adhesive compositions according to the present disclosure (Ex.6 and Ex.7) provide improved stability characteristics, while preserving excellent processing capability - in particular coatability - of the pressure sensitive adhesive compositions, when compared to compositions not according to the invention (C4), even at higher filler loading.

## Claims

1. A thermally conductive pressure sensitive adhesive composition, comprising:
a) an acrylic polymer component; and
b) a boron nitride mixture composition comprising:
i. anisotropic boron nitride agglomerates comprising hexagonal boron nitride primary particles, wherein the hexagonal boron nitride primary particles have an average primary particle size d₅₀ comprised between 1 and 50 µm, wherein the anisotropic boron nitride agglomerates have an average agglomerate size d₅₀ comprised between 50 and 250 µm and an aspect ratio greater than 1.5, and wherein the envelope density of the anisotropic boron nitride agglomerates is greater than 1 g/cm³, when measured according to the test method described in the experimental section; and
ii. (optionally), free hexagonal boron nitride primary particles having an average primary particle size d₅₀ comprised between 3 and 50 µm; and
wherein the content of the boron nitride mixture composition is greater than 15 vol%, based on the volume of the thermally conductive pressure sensitive adhesive composition.

2. A thermally conductive pressure sensitive adhesive composition according to claim 1, wherein the envelope density of the anisotropic boron nitride agglomerates is greater than 1.2 g/cm³, greater than 1.4 g/cm³, greater than 1.5 g/cm³, greater than 1.7 g/cm³, greater than 1.8 g/cm³, or even greater than 2.0 g/cm³, when measured according to the test method described in the experimental section.

3. A thermally conductive pressure sensitive adhesive composition according to any of the preceding claims, wherein the anisotropic boron nitride agglomerates have a specific surface area (SSA) measured by BET no greater than 10 m²/g, no greater than 8 m²/g, no greater than 7 m²/g, no greater than 5 m²/g, or even no greater than 4 m²/g.

4. A thermally conductive pressure sensitive adhesive composition according to any of the preceding claims, wherein the anisotropic boron nitride agglomerates are free of fines fraction, in particular free of fines fraction of non-agglomerated material having a size of less than 100 µm, or even less than 50 µm.

5. A thermally conductive pressure sensitive adhesive composition according to any of the preceding claims, wherein the hexagonal boron nitride primary particles forming the anisotropic boron nitride agglomerates are agglomerated with one another with a preferred orientation, and wherein the anisotropic boron nitride agglomerates have a flake shape.

6. A thermally conductive pressure sensitive adhesive composition according to any of the preceding claims, wherein the boron nitride mixture composition further comprises isotropic hexagonal boron nitride primary particle agglomerates having an average agglomerate size d₅₀ comprised between 60 and 420 µm.

7. A thermally conductive pressure sensitive adhesive composition according to any of the preceding claims, which comprises a boron nitride mixture composition comprising:
i. anisotropic boron nitride agglomerates comprising hexagonal boron nitride primary particles and having an average agglomerate size d₅₀ comprised between 50 and 250 µm, between 60 and 220 µm, between 80 and 200 µm, between 80 and 180 µm, between 90 and 180 µm, between 90 and 160 µm, between 90 and 140 µm, or even between 90 and 120 µm;
ii. free hexagonal boron nitride primary particles having an average primary particle size d₅₀ comprised between 3 and 25µm, between 5 and 25 µm, between 10 and 20 µm, between 10 and 18 µm, between 12 and 18 µm, or even between 13 and 16 µm; and
iii. optionally, isotropic hexagonal boron nitride primary particle agglomerates having an average agglomerate size d₅₀ comprised between 60 and 420 µm, between 60 and 300 µm, between 60 and 200 µm, or even between 70 and 150 µm.

8. A thermally conductive pressure sensitive adhesive composition according to any of the preceding claims, which comprises a boron nitride mixture composition in an amount no greater than 45 vol%, no greater than 40 vol%, no greater than 35 vol%, or even no greater than 30 vol%, based on the volume of thermally conductive pressure sensitive adhesive composition.

9. A thermally conductive pressure sensitive adhesive composition according to any of the preceding claims, wherein the anisotropic boron nitride agglomerates, and optionally, the free hexagonal boron nitride primary particles and/or the isotropic hexagonal boron nitride primary particle agglomerates are, at least partially, in direct physical contact to each other within the thermally conductive pressure sensitive adhesive composition.

10. A thermally conductive pressure sensitive adhesive composition according to any of the preceding claims, in the form of a layer having a thickness greater than 400 µm, greater than 500 µm, greater than 600 µm, greater than 800 µm, greater than 1000 µm, greater than 1200 µm, or even greater than 1500 µm.

11. A thermally conductive pressure sensitive adhesive composition according to any of the preceding claims, which has a through-plane thermal conductivity of at least 0.4 W/mK, at least 0.6 W/mK, at least 0.8 W/mK, at least 1.0 W/mK, or even at least 1.2 W/mK, when measured according to the test method described in the experimental section.

12. A thermally conductive pressure sensitive adhesive composition according to any of the preceding claims, which has a 90° peel strength value of at least 5 N/cm, at least 8 N/cm, at least 10 N/cm, at least 15 N/cm, at least 20 N/cm, at least 25 N/cm, or even at least 30 N/cm, when measured according to the test method described in the experimental section.

13. A thermally conductive pressure sensitive adhesive composition according to any of the preceding claims, which has a dynamic shear viscosity of less than 40 Pas, less than 30 Pas, less than 20 Pas, less than 15 Pas, or even less than 10 Pas, when measured at a shear rate of 10 s⁻¹ according to the test method described in the experimental section.

14. A method of manufacturing a thermally conductive pressure sensitive adhesive, which comprises the steps of:
a) providing a (co)polymerizable material comprising a (meth)acrylate ester monomer; and optionally, a co-monomer having an ethylenically unsaturated group;
b) polymerizing the (co)polymerizable material comprising a (meth)acrylate ester monomer, thereby forming a (co)polymerized material having a coatable viscosity;
c) providing a boron nitride mixture composition comprising:
i. anisotropic boron nitride agglomerates comprising hexagonal boron nitride primary particles, wherein the hexagonal boron nitride primary particles have an average primary particle size d₅₀ comprised between 1 and 25 µm, wherein the anisotropic boron nitride agglomerates have an average agglomerate size d₅₀ comprised between 50 and 250 µm and an aspect ratio greater than 1.5, and wherein the envelope density of the anisotropic boron nitride agglomerates is greater than 1 g/cm³, when measured according to the test method described in the experimental section; and
ii. (optionally), free hexagonal boron nitride primary particles having an average primary particle size d₅₀ comprised between 3 and 25µm; and
whereby the content of the boron nitride mixture composition is greater than 15 vol%, based on the volume of the thermally conductive pressure sensitive adhesive composition;
d) blending the boron nitride mixture composition and the (co)polymerized material, thereby forming a homogeneous coatable composition;
e) coating the coatable composition onto a substrate thereby forming a layer of a thermally conductive pressure sensitive adhesive; and
f) optionally, curing the layer of the thermally conductive pressure sensitive adhesive.

15. Use of a thermally conductive pressure sensitive adhesive composition according to any of claims 1 to 13 for industrial applications, in particular for thermal management applications.
